# FASCICULE DE BREVET EUROPEEN

(11) **EP 3 235 217 B1**
(45) Date de publication et mention de la délivrance du brevet: **04.09.2019**
(21) Numéro de dépôt: 15823628.1
(22) Date de dépôt: 09.12.2015
(51) Int. Cl.: H04L 29/06, H04L 29/08, H04L 12/707

(54) **PROCÉDÉ D'ÉCHANGES DE DONNÉES ENTRE DEUX NAVIGATEURS INTERNET, ÉQUIPEMENT DE ROUTAGE, TERMINAL, PROGRAMME D'ORDINATEUR ET SUPPORT D'INFORMATIONS CORESPONDANTS**
VERFAHREN ZUM DATENAUSTAUSCH ZWISCHEN WEBBROWSERN SOWIE ROUTINGVORRICHTUNG, ENDGERÄT, COMPUTERPROGRAMM UND SPEICHERMEDIUM DAFÜR
METHOD FOR DATA EXCHANGE BETWEEN WEB BROWSERS, AND ROUTING DEVICE, TERMINAL, COMPUTER PROGRAM AND STORAGE MEDIUM THEREFOR

(30) Priorité: 16.12.2014 FR 1462523
(43) Date de publication de la demande: 25.10.2017
(73) Titulaire: Orange, 75015 Paris (FR)
(72) Inventeur: JANCZUKOWICZ, Ewa, 22300 Lannion (FR); FROMENTOUX, Gaël, 22560 Pleumeur Bodou (FR); MARJOU, Xavier, 22300 Lannion (FR)
(74) Mandataire: Vidon Brevets & Stratégie
(86) Numéro de dépôt international: PCT/FR2015/053394
(87) Numéro de publication internationale: WO 2016/097534

(56) Documents cités:
- WO-A1-2014/004040
- J Rosenberg: "Interactive Connectivity Establishment (ICE): A Protocol for Network Address Translator (NAT) Traversal for Offer/Answer Protocols' IETF RFC 5245", , 1 avril 2010 (2010-04-01), XP055154341, Extrait de l'Internet: URL:http://tools.ietf.org/pdf/rfc5245.pdf [extrait le 2014-11-21]

## Description

### 1. Domaine de l'invention

Le domaine de l'invention est celui des communications au sein d'un réseau de communications, et plus particulièrement celui de l'échange de données entre deux navigateurs internet.

Plus précisément, l'invention offre une solution pour l'échange de données entre deux navigateurs internet permettant de s'affranchir de la présence de relais média, de type serveur TURN (en anglais « Traversai Using Relays around NAT »). On rappelle que de tels relais média sont classiquement utilisés pour rediriger les paquets de données de type « média » reçus d'un premier navigateur internet vers un second navigateur internet, et vice-versa.

L'invention trouve notamment des applications pour l'échange de données selon la technologie WebRTC (en anglais « Web Real-Time Communication »), permettant l'établissement de communications directement de pair à pair (en anglais « peer to peer » ou P2P) entre deux navigateurs internet, installés par exemple sur deux terminaux d'utilisateurs.

### 2. Art antérieur

La technologie WebRTC permet notamment des communications en visioconférence avec échanges de données de type média en P2P, le partage de fichiers en P2P ou encore la voix sur IP (en anglais « Voice over Internet Protocol »).

Pour ce faire, une communication WebRTC est classiquement établie au moyen d'un échange de messages de signalisation entre deux terminaux, en utilisant le serveur Web d'un fournisseur de services.

Par « fournisseur de services », on entend ici, et dans toute la suite du document, toute entité apte à fournir tout type de service impliquant des échanges de flux de données, notamment sur le réseau de télécommunications mobile. Le flux de données peut être transporté sur le réseau entre un terminal utilisateur et un serveur dédié du fournisseur de services, ou peut être transporté entre deux terminaux utilisateurs.

En particulier, dans le cadre d'une communication WebRTC, le fournisseur de services permet la mise en liaison de deux utilisateurs qui échangent ensuite directement des données en P2P.

Les communications produisent des flux de données P2P, qui utilisent principalement le protocole de transport UDP (en anglais « User Datagram Protocol »), ou parfois le protocole de transport TCP (en anglais « Transmission Control Protocol »), pour échanger des données entre les terminaux.

Idéalement, selon la technologie WebRTC, les flux de données P2P sont échangés directement entre les terminaux.

Cependant, l'échange de données en P2P n'est pas toujours possible, selon la configuration du réseau. En particulier, l'échange de données en P2P peut être interdit dans le cas de réseaux d'accès ayant mis hors service le trafic P2P, ou rendu difficile dans le cas de certaines architectures mettant en oeuvre des dispositifs de traduction d'adresse réseau (en anglais « Network Address Translation » ou NAT) ou des pare-feux (en anglais « firewall »), par exemple dans les réseaux d'entreprises.

Pour établir la communication dans de tels cas, la technologie WebRTC propose d'utiliser un protocole d'établissement de connectivité interactif (en anglais « Interactive Connectivity Establishment » ou ICE), qui permet d'augmenter les chances de traverser les NATs ou les pare-feux en découvrant et utilisant des moyens IP de remplacement grâce à trois mécanismes complémentaires :
- l'utilisation du protocole de transport TCP au lieu du protocole de transport UDP ;
- l'utilisation de serveurs STUN (en anglais « Session Traversai Utilities for NAT », tels que décrits notamment dans le document « Session Traversai Utilities for NAT (STUN) » - RFC 5389) par les terminaux pour découvrir leurs adresses publiques quand ils sont placés derrière un NAT ; et
- l'utilisation de serveurs TURN (en anglais « Traversai Using Relays around NAT » tels que décrits notamment dans le document « Traversai Using Relays around NAT (TURN) : Relay Extensions to Session Traversai Utilities for NAT (STUN) - RFC 5766), situés du côté public d'un NAT (c'est-à-dire généralement sur l'internet public).

Le protocole ICE tel que connu du document "Interactive Connectivity Establishment: a Protocol for Network Address Translator (NAT) Traversai for Offer/Answer Protocols" (RFC 5245) permet aux terminaux de découvrir des adresses possibles, encore appelées adresses candidates, pouvant être utilisées pour recevoir des données, par exemple de type média. Une fois découvertes par un terminal, ces adresses candidates sont envoyées au terminal distant via le canal de signalisation. Chaque terminal exécute alors une procédure de vérification de connectivité sur toutes les paires d'adresses candidates.

Pour cette vérification de connectivité, on utilise des messages STUN, chaque message comprenant un en-tête suivi éventuellement d'un ou plusieurs attributs. On note que les adresses IP et les numéros de port utilisés pour échanger des messages STUN de vérification de connectivité sont les mêmes que ceux utilisés pour les échanges de données de type média.

S'il s'avère qu'il existe une pluralité de paires d'adresses candidates permettant aux terminaux de se connecter entre eux, alors on choisit l'une de ces paires selon des critères de priorité prédéterminés.

Afin de sécuriser l'échange de données en P2P et de contrôler l'accès à un serveur TURN utilisé par un fournisseur de services WebRTC, il a notamment été proposé d'utiliser le protocole « OAuth », tel que présenté dans le projet TRAM de l'IETF intitulé « Extension TURN pour l'Autorisation Tierce » (en anglais « TURN Extension for Third Party Authorization »).

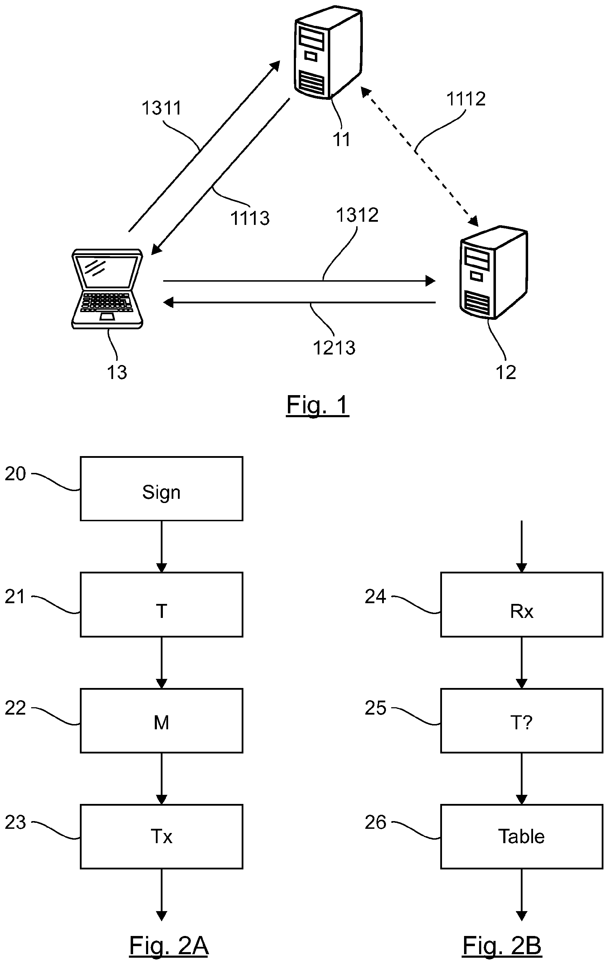

Pour ce faire, comme illustré en figure 1, on met en oeuvre un échanges de clés (1112) entre un serveur d'autorisation 11, qui peut être le serveur WebRTC, et un serveur TURN 12, permettant de mettre en place au niveau du serveur TURN 12 une clé symétrique.

Pour l'établissement d'une communication WebRTC, un client 13 envoie au serveur d'autorisation 11 une demande de jeton d'accès (1311). Celui-ci répond en envoyant au client 13 un jeton d'accès et une clé de session (1113). Le client 13 obtient ainsi un jeton éphémère indépendant.

Le client 13 envoie ensuite au serveur TURN 12 une requête TURN et le jeton d'accès (1312). Le serveur TURN 12 valide le jeton d'accès avec sa clé symétrique, ce qui permet au client 13 d'avoir accès aux services du serveur TURN (1213). Cette mise en oeuvre permet de produire des jetons indépendants que le serveur TURN 12 peut vérifier sans l'aide du serveur d'autorisation 11.

On note que la clé symétrique mise en place au niveau du serveur TURN 12 ne doit pas être trop longue car le jeton crypté doit être intégré dans un unique message STUN.

Grâce à ce protocole « OAuth », on peut vérifier que le client qui s'adresse à un serveur TURN (dont l'adresse IP est publique) est bien abonné auprès d'un fournisseur de services WebRTC ayant le droit d'utiliser ce serveur TURN.

Cette solution permet d'identifier et de traiter des flux de façon différenciée. Le serveur TURN sert de relais média, parce que l'on connaît son adresse IP fixe. Les prestataires de services réseau (en anglais « Network Service Provider » ou NSP), par exemple les fournisseurs d'accès à Internet (en anglais « Internet Service Provider » ou ISP), peuvent utiliser ces informations pour traiter ces flux (c'est-à-dire les flux qui ont l'adresse IP du serveur TURN comme adresse source ou comme adresse de destination) d'une façon souhaitée, par exemple pour la gestion de routage ou la priorisation de QoS (en anglais « Quality of Service »).

On note que, dans les communications de type WebRTC, les routeurs utilisent classiquement des tables IP statiques pour gérer les chemins des flux. L'utilisation de relais média, comme les serveurs TURN, est un moyen d'influencer le routage des flux WebRTC et de les rediriger. Quand donc un fournisseur de services WebRTC souhaite faire passer des flux média par un autre chemin que le chemin P2P, il utilise habituellement un serveur TURN. Mais un tel serveur est coûteux, puisque non seulement il traite les flux de données de type média de la communication, mais qu'en outre il exécute des traitements comme le routage, le contrôle ou le marquage des données.

### 3. Exposé de l'invention

L'invention propose une solution nouvelle pour l'échange de données entre deux navigateurs internet, permettant notamment de s'affranchir de l'utilisation d'un serveur TURN.

Plus précisément, l'invention propose un procédé d'échanges de données entre un premier navigateur internet et un deuxième navigateur internet d'un réseau de communication, comprenant une phase d'initialisation mettant en oeuvre, au niveau d'un équipement de routage du réseau placé sur un chemin de communication par défaut entre les premier et deuxième navigateurs :
- une étape de réception d'un message de vérification de connectivité entre les navigateurs, ledit message portant un attribut spécifique d'autorisation d'échanges de données entre les navigateurs ;
- une étape vérification d'une autorisation d'échanges de données entre les navigateurs, à partir de l'attribut spécifique ;
- en cas de vérification positive, une étape de modification d'au moins une table de routage des données entre le premier navigateur et le deuxième navigateur, de manière à définir un chemin de communication de remplacement entre les navigateurs, passant par l'équipement de routage.

L'invention repose ainsi sur l'utilisation d'un équipement de routage, placé sur un chemin de communication entre les premier et deuxième navigateurs, auquel on a affecté des fonctionnalités particulières.

En particulier, un tel équipement de routage permet de gérer les décisions de routage entre le premier navigateur internet et le deuxième navigateur internet, de manière à forcer la communication entre les deux navigateurs via un chemin particulier, dit chemin de communication de remplacement, passant lui aussi par l'équipement de routage, par exemple pour éviter des problèmes de congestion sur le chemin par défaut, pour forcer le passage via un équipement intermédiaire prédéterminé (équipement de comptage, de collecte), etc.

Un tel équipement de routage peut notamment être géré par un prestataire de services réseau (NSP).

En particulier, l'utilisation d'un tel équipement de routage permet de s'affranchir de l'utilisation d'un serveur TURN pour échanger des données entre deux navigateurs internet, notamment dans le cadre d'une communication WebRTC.

On notera que, selon l'invention, il n'est dans tous les cas besoin que d'un seul message pour vérifier la connectivité entre les deux terminaux. Ce message utilise généralement les adresses IP du mode P2P.

Selon un mode de réalisation particulier de l'invention, le message de vérification de connectivité entre les navigateurs est de type STUN.

En d'autres termes, l'équipement de routage reçoit un message STUN particulier, portant un attribut spécifique d'autorisation d'échanges de données entre les navigateurs, en provenance du premier navigateur internet.

Par exemple, un tel attribut spécifique est un jeton d'accès, qui peut être généré par un serveur d'autorisation (qui peut être le serveur WebRTC).

L 'équipement de routage peut alors vérifier si l'échange de données entre les navigateurs est autorisé, par exemple en mettant en oeuvre une fonction de type « vérification STUN ».

Une telle fonctionnalité peut notamment être téléchargée et stockée sur l'équipement de routage, ou mise en oeuvre en appelant une interface de programmation (en anglais « Application Programming Interface » ou API) fournissant une telle fonctionnalité.

Selon un premier exemple, l'étape de vérification d'une autorisation d'échanges de données met en oeuvre une clé connue de l'équipement de routage, pour vérifier la validité du jeton d'accès.

Une telle clé est par exemple fournie par un prestataire de services réseau, et symétrique à une clé utilisée pour obtenir le jeton d'accès.

Selon un deuxième exemple, l'étape de vérification d'une autorisation d'échanges de données met en oeuvre un échange d'informations avec un serveur d'autorisation pour vérifier la validité du jeton d'accès.

En cas de vérification positive, l'équipement de routage peut alors modifier au moins une table de routage des données entre le premier navigateur et le deuxième navigateur, par exemple une table stockant les adresses IP source et destination des données. On considère donc selon l'invention des tables de routage dynamiques.

Selon un mode de réalisation particulier de l'invention, le procédé d'échanges de données comprend également une phase d'échanges de données mettant en oeuvre, au niveau de l'équipement de routage :
- une étape de réception d'un flux de données (de type média) en provenance du premier navigateur ;
- une étape de transmission du flux de données (de type média) au deuxième navigateur, via un équipement intermédiaire de réseau prédéterminé placé sur le chemin de communication de remplacement.

Selon ce mode de réalisation, l'équipement de routage force donc l'échange de données entre deux navigateurs via un équipement intermédiaire prédéterminé, permettant par exemple d'assurer un comptage de trafic ou une collecte d'informations de trafic.

Dans un autre mode de réalisation, l'invention concerne un équipement de routage d'un réseau de communication, destiné à être placé sur un chemin de communication par défaut entre un premier navigateur internet et un deuxième navigateur internet dudit réseau, comprenant :
- un module de réception d'un message de vérification de connectivité entre les navigateurs, ledit message portant un attribut spécifique d'autorisation d'échanges de données entre les navigateurs ;
- un module de vérification d'une autorisation d'échanges de données entre les navigateurs, à partir dudit attribut spécifique ;
- un module de modification d'au moins une table de routage des données entre le premier navigateur et le deuxième navigateur, activé en cas de vérification positive, de manière à définir un chemin de communication de remplacement entre les navigateurs, passant par l'équipement de routage.

Un tel équipement de routage est notamment adapté à mettre en oeuvre le procédé d'échanges de données décrit précédemment.

Cet équipement de routage pourra bien sûr comporter les différentes caractéristiques relatives au procédé d'échanges de données selon l'invention, qui peuvent être combinées ou prises isolément. Ainsi, les caractéristiques et avantages de cet équipement de routage sont les mêmes que ceux du procédé d'échanges de données. Par conséquent, ils ne sont pas détaillés plus amplement.

L'invention concerne également un procédé de transmission de données d'un premier navigateur internet à destination d'un deuxième navigateur internet d'un réseau de communication, comprenant une étape au cours de laquelle ledit premier navigateur émet un message de signalisation requérant une communication (par exemple de type WebRTC) avec ledit deuxième navigateur. Ledit procédé comprend en outre les étapes suivantes :
- réception, par le premier navigateur, d'un attribut spécifique d'autorisation d'échanges de données entre les navigateurs, fourni par un serveur d'autorisation ;
- génération d'un message de vérification de connectivité entre les navigateurs, ledit message portant ledit attribut spécifique ; et
- transmission du message au deuxième navigateur via un équipement de routage du réseau placé sur un chemin de communication par défaut entre les premier et deuxième navigateurs.

Un tel procédé permet donc de générer un message de vérification de connectivité entre les navigateurs, portant un attribut spécifique. Un tel message est transmis du premier navigateur internet à destination du deuxième navigateur internet, via l'équipement de routage. Il peut donc être au moins partiellement lu et traité par l'équipement de routage.

Par exemple, un tel message est de type STUN, et porte un attribut spécifique correspondant à un jeton d'accès. Un tel jeton d'accès peut être généré par un serveur d'autorisation.

Un tel procédé est notamment mis en oeuvre par un terminal utilisant un premier navigateur internet, pour que ce premier navigateur internet puisse communiquer en P2P avec un deuxième navigateur internet, selon la technologie WebRTC, sans nécessiter l'utilisation d'un serveur TURN.

Dans un autre mode de réalisation, l'invention concerne un terminal d'un réseau de communication, équipé d'un premier navigateur internet destiné à transmettre des données à destination d'un deuxième navigateur internet contenu dans un terminal distant dudit réseau, et comprenant un module d'émission d'un message de signalisation requérant une communication (par exemple de type WebRTC) avec ledit deuxième navigateur. Ledit terminal comprend en outre :
- un module de réception d'un attribut spécifique d'autorisation d'échanges de données entre les navigateurs, fourni par un serveur d'autorisation ;
- un module de génération d'un message de vérification de connectivité entre les navigateurs, ledit message portant ledit attribut spécifique ;
- un module de transmission du message au deuxième navigateur via un équipement de routage du réseau placé sur un chemin de communication par défaut entre les premier et deuxième navigateurs.

Un tel terminal est notamment adapté à mettre en oeuvre le procédé de transmission de données décrit précédemment.

Ce terminal pourra bien sûr comporter les différentes caractéristiques relatives au procédé de transmission de données selon l'invention, qui peuvent être combinées ou prises isolément. Ainsi, les caractéristiques et avantages de ce terminal sont les mêmes que ceux du procédé de transmission de données. Par conséquent, ils ne sont pas détaillés plus amplement.

En particulier, un tel terminal peut être de type téléphone, tablette, ordinateur, etc., équipé d'un navigateur internet. Selon un mode de réalisation particulier, un tel navigateur internet est compatible avec la technologie WebRTC.

Dans un autre mode de réalisation, l'invention concerne un ou plusieurs programmes d'ordinateur comportant des instructions pour la mise en oeuvre du procédé d'échanges de données ou du procédé de transmission de données tels que décrits ci-dessus, lorsque ce ou ces programmes sont exécutés par un processeur.

Dans encore un autre mode de réalisation, l'invention concerne un ou plusieurs supports d'informations, inamovibles, ou partiellement ou totalement amovibles, lisibles par un ordinateur, et comportant des instructions d'un ou plusieurs programmes d'ordinateur pour l'exécution des étapes du procédé d'échange de données ou du procédé de transmission de données tels que décrits ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1, présentée en relation avec l'art antérieur, rappelle le principe général du mécanisme d'authentification « OAuth » ;
- les figures 2A et 2B présentent respectivement les principales étapes mises en oeuvre par un procédé de transmission de données et un procédé d'échange de données selon un mode de réalisation de l'invention ;
- la figure 3 illustre un exemple de réseau utilisant l'invention ;
- les figures 4 et 5 sont des organigrammes présentant les opérations mises en oeuvre par les différents équipements du réseau de la figure 3 selon un mode de réalisation de l'invention ;
- les figures 6 et 7 présentent respectivement la structure simplifiée d'un terminal et d'un équipement de routage selon un mode de réalisation particulier de l'invention.

### 5. Description d'un mode de réalisation de l'invention

### 5.1 Principe général

Le principe général de l'invention repose sur l'utilisation d'un équipement de routage particulier entre deux navigateurs internet, permettant de diriger les communications sur un chemin de communication particulier pour les échanges de données entre les deux navigateurs.

Plus précisément, l'invention permet à un trafic autorisé, c'est-à-dire un flux de données muni d'un attribut spécifique d'autorisation d'échanges de données entre les navigateurs, d'être acheminé par un chemin de réseau spécifique en modifiant des tables de routage. On redirige ainsi ce trafic pour qu'il passe par exemple par un équipement utilisé pour compter le trafic ou collecter des informations de trafic. L'attribut spécifique est fourni par le fournisseur de services WebRTC, et le traitement associé peut être effectué par un prestataire de services réseau (NSP).

On présente en relation, avec la figure 2A, les principales étapes mises en oeuvre par un premier client équipé d'un premier navigateur internet, pour transmettre des données à un deuxième client équipé d'un deuxième navigateur internet au sein d'un réseau de communication. On note que les mêmes opérations peuvent être mise en oeuvre pour la transmission de données du deuxième client vers le premier client, puisque la communication est symétrique.

Au cours d'une première étape 20, le premier navigateur émet un message de signalisation requérant une communication avec le deuxième navigateur.

Au cours d'une deuxième étape 21, le premier client reçoit un attribut spécifique d'autorisation d'échanges de données entre les navigateurs, par exemple un jeton d'accès T, fourni par un serveur d'autorisation (par exemple un serveur WebRTC).

Le premier client génère ensuite, au cours d'une troisième étape 22, un message de vérification de connectivité entre les navigateurs. Un tel message M porte l'attribut spécifique T.

Ce message de vérification de connectivité est ensuite transmis au deuxième navigateur au cours d'une quatrième étape 23, via un équipement de routage du réseau placé sur un chemin de communication par défaut entre les premier et deuxième navigateurs.

Le message de vérification de connectivité peut ainsi être analysé et traité par l'équipement de routage du réseau.

On présente désormais, en relation, avec la figure 2B, les principales étapes mises en oeuvre par l'équipement de routage du réseau placé sur un chemin de communication par défaut entre les premier et deuxième navigateurs, pour échanger des données entre les deux navigateurs.

Un tel équipement de routage met en oeuvre, au cours d'une phase d'initialisation, une première étape 24 de réception d'un message de vérification de connectivité entre les navigateurs. Un tel message porte un attribut spécifique d'autorisation d'échanges de données entre les navigateurs. En particulier, un tel message est le message M généré par le premier client, portant l'attribut spécifique T.

Au cours d'une deuxième étape 25, l'équipement de routage met en oeuvre une vérification d'une autorisation d'échanges de données entre les premier et deuxième navigateurs. Au cours de cette deuxième étape, l'équipement de routage valide que le premier navigateur internet et le deuxième navigateur internet peuvent échanger des données directement, en P2P.

En cas de vérification positive, l'équipement de routage modifie, au cours d'une troisième étape 26, au moins une table de routage des données entre le premier et le deuxième navigateurs internet.

Cette modification de la ou des tables de routage permet notamment de définir un chemin de communication de remplacement entre les deux navigateurs internet passant lui aussi par l'équipement de routage, par exemple pour éviter des problèmes de congestion sur le meilleur chemin de communication entre les navigateurs internet et le serveur internet pour l'échange de données de type média (encore appelé chemin par défaut ou chemin principal), pour forcer le passage des données via un équipement intermédiaire prédéterminé du réseau, etc.

Selon un mode de réalisation particulier, au cours d'une phase d'échanges de données, l'équipement de routage met en oeuvre des étapes supplémentaires de réception d'un flux de données en provenance du premier navigateur, par exemple un flux de données de type média, et de transmission du flux de données au deuxième navigateur via un équipement intermédiaire prédéterminé de réseau placé sur le chemin de communication de remplacement.

Selon ce mode de réalisation particulier, on redirige ainsi les flux de données échangés entre deux navigateurs internet pour les forcer à passer par un équipement intermédiaire prédéterminé du réseau, par exemple un équipement de comptage ou de collecte d'informations.

On entend ici par « flux de données » un ensemble de paquets de données transmis de manière unidirectionnelle entre deux entités du réseau. Classiquement, un flux de données se caractérise par une adresse IP source (celle de l'émetteur du flux), un numéro de port source, une adresse IP de destination (celle du destinataire), un numéro de port de destination, et un protocole de transport.

L'invention trouve notamment des applications pour les échanges de données entre navigateurs internet selon la technologie WebRTC, en utilisant un serveur STUN.

On rappelle à cet effet que le serveur STUN n'est pas présent sur le chemin de communication des données en WebRTC. Il est utilisé par les navigateurs internet / terminaux à certains moments pendant les communications, notamment pour découvrir le réseau.

Dans ce contexte, l'invention propose donc d'utiliser un équipement de routage du réseau capable de lire les messages STUN pour assurer une gestion de routage spécialisée.

Pour ce faire, l'invention repose sur l'utilisation, dans ce contexte, de jetons d'accès et d'un mécanisme d'authentification de type « OAuth » pour identifier les flux de données de type média qui ont l'autorisation d'être redirigés, conformément à des accords passés entre des fournisseurs de services de communications WebRTC et des prestataires de services réseau par exemple. De plus, l'invention propose selon un mode de réalisation particulier que le trafic redirigé passe par un équipement intermédiaire prédéterminé, servant par exemple à compter le trafic ou à collecter des informations de trafic.

Dans ce contexte, l'invention enrichit donc le projet TRAM de l'IETF intitulé « Extension TURN pour l'Autorisation Tierce » précité, en proposant une solution de redirection de flux de données de type média même lorsqu'il n'existe aucun relais média dans le chemin de communication.

Cette solution est avantageusement légère par comparaison avec la fourniture de ces fonctionnalités par un GGSN (on rappelle qu'un « Gateway GPRS Support Node », ou GGSN, est une passerelle d'interconnexion entre un réseau paquet mobile et des réseaux IP externes).

### 5.2 Exemple détaillé de mise en oeuvre

On présente ci-après un exemple détaillé de mise en oeuvre de l'invention, pour l'échange de données de type média entre deux clients selon la technologie WebRTC.

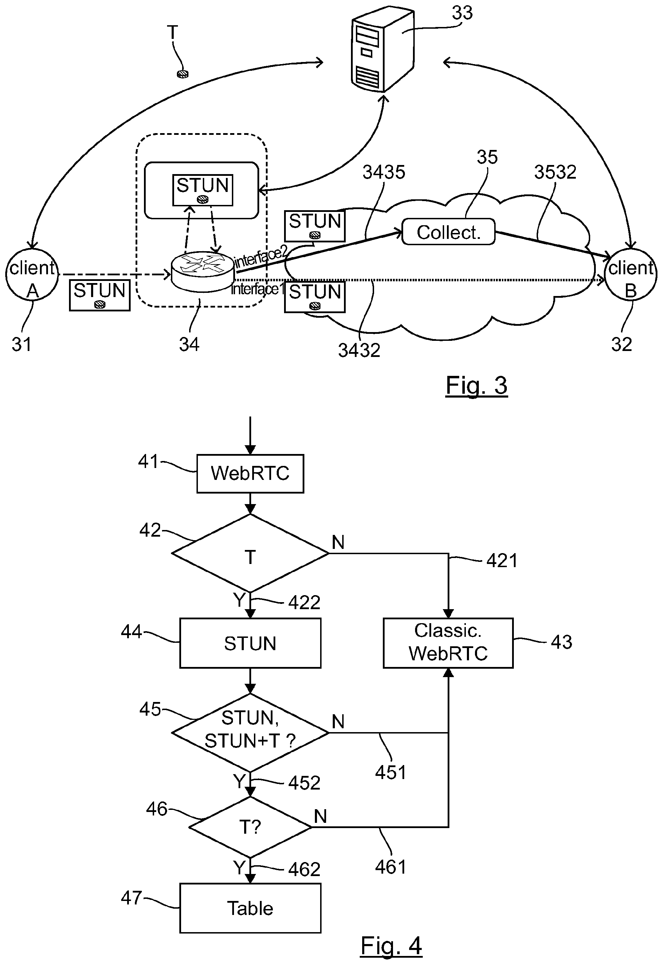

On considère pour ce faire un réseau de communication illustré en figure 3, comprenant deux terminaux client 31 et 32, équipés chacun d'un navigateur internet supportant la technologie WebRTC, un serveur d'autorisation 33, un équipement de routage 34, et un équipement intermédiaire prédéterminé 35.

L'équipement de routage 34 est placé sur le chemin principal de communication WebRTC et est géré par un prestataire de services réseau.

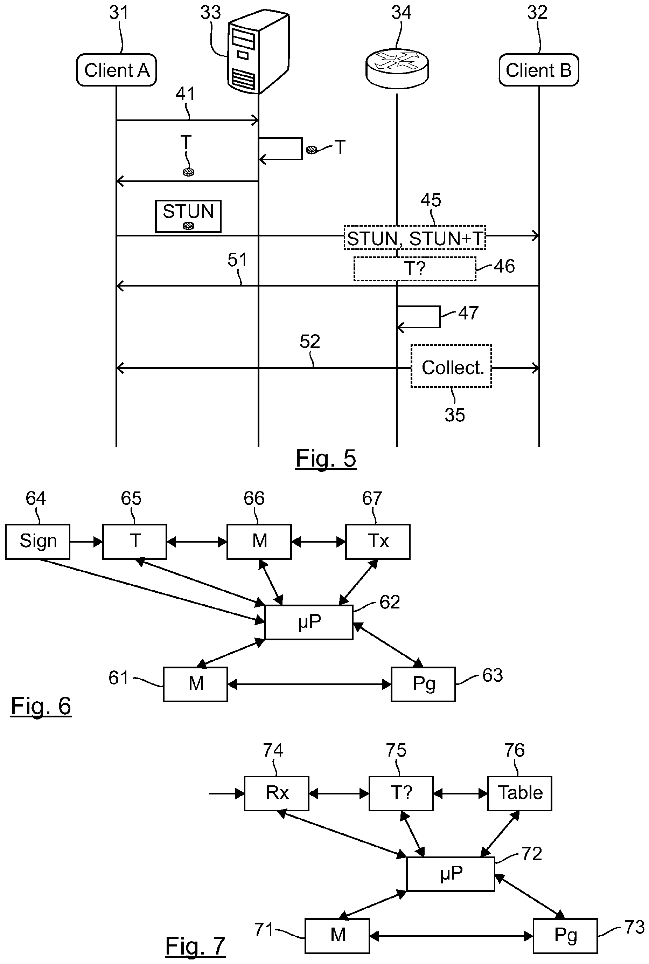

On décrit ci-après, en relation avec les figures 4 et 5, les opérations mises en oeuvre pour la transmission de données du navigateur internet du premier client A 31 vers le navigateur internet du deuxième client B 32. A nouveau, on note que les mêmes opérations peuvent être mise en oeuvre pour la transmission de données du navigateur internet du deuxième client B 32 vers le navigateur internet du premier client A 31.

On considère, comme illustré en figure 3, que les clients A 31 et B 32 sont les points d'extrémité du réseau qui établissent une communication WebRTC.

Selon cet exemple, le premier client A 31 souhaite initier (41) une session d'échanges de données en P2P avec le deuxième client B 32, selon la technologie WebRTC.

Pour ce faire, le client A 31 doit tout d'abord obtenir (42) un jeton d'accès T de la part du serveur d'autorisation 33. Un tel serveur d'autorisation peut être prévu par un fournisseur de services WebRTC. Ce serveur peut être le même que celui utilisé pour l'établissement de la connexion WebRTC.

Plus précisément, quand le premier client A 31 appelle le deuxième client B 32, il se produit un début d'établissement de communication WebRTC. La signalisation peut être assurée par le serveur Web du fournisseur de services WebRTC. Le fournisseur de services WebRTC décide si une communication donnée doit préférentiellement être redirigée (changement de tables de routage, et éventuellement passage par un équipement intermédiaire prédéterminé). Si oui, il fournit un jeton d'accès au premier client A 31 et/ou au deuxième client B 32, puisque la communication est symétrique.

Si le premier client A 31 n'obtient pas de jeton d'accès T de la part du serveur d'autorisation (421), on initie une session WebRTC « classique », sans changement dans les tables de routage et sans modification du chemin principal de communication entre le premier client A 31 et le deuxième client B 32 (43).

S'il obtient un jeton d'accès T de la part du serveur d'autorisation (422), le client A 31 génère (44) un message de vérification de connectivité entre le navigateur internet du premier client A 31 et le navigateur internet du deuxième client B 32. Un tel message porte un attribut spécifique d'autorisation d'échanges de données entre les navigateurs, à savoir le jeton d'accès T. Par exemple, un tel message est de type STUN.

Selon ce mode de réalisation, un message STUN utilisé pour l'établissement d'une connexion dans les communications WebRTC inclut donc un attribut STUN supplémentaire, à savoir le « jeton d'accès » T.

Le message STUN portant le jeton d'accès est transmis par le premier client A 31 au deuxième client B 32 via l'équipement de routage 34, qui met en oeuvre les opérations classiques de vérification de connectivité pour tous les candidats ICE. Le deuxième client B 32 envoie une réponse STUN (51) au premier client A 31.

L'équipement de routage 34 est capable d'analyser les messages STUN (qui ne sont pas cryptés) pour détecter si un message STUN porte un attribut de type jeton d'accès (45).

Suite à l'analyse du message STUN, si l'équipement de routage n'identifie pas d'attribut supplémentaire de type jeton d'accès dans le message STUN (451), on initie une session WebRTC « classique », sans changement dans les tables de routage et sans modification du chemin principal de communication entre le premier client A 31 et le deuxième client B 32 (43).

Si l'équipement de routage identifie un attribut supplémentaire de type jeton d'accès dans le message STUN (452), il vérifie (46) la validité du jeton d'accès. La vérification du jeton est donc mise en oeuvre par un équipement de réseau donné, l'équipement de routage 34.

L'équipement de routage 34 effectue donc les opérations de vérification de connectivité et de vérification de la validité du jeton. Pour ce faire, l'équipement de routage met en oeuvre une fonction de vérification de messages STUN, acquise par exemple en téléchargeant une fonctionnalité « vérification STUN », dans le cadre de son microprogramme, ou en appelant une interface de programmation fournissant une fonctionnalité « vérification STUN ». La fonction de vérification de messages STUN effectue aussi la vérification de jeton. En particulier, on note que l'équipement de routage 34 peut lire les messages STUN utilisés pendant les vérifications de connectivité ICE, car l'on suppose que ces messages ne sont pas cryptés.

Cette vérification de la validité du jeton peut être effectuée par exemple selon les variantes suivantes :
- pour un jeton d'accès indépendant, les fournisseurs de services réseau peuvent établir une clé symétrique ; l'équipement de routage peut ensuite utiliser cette clé symétrique pour vérifier le jeton d'accès, sans avoir besoin d'appeler le serveur d'autorisation 33 à chaque fois qu'il souhaite vérifier le jeton d'accès ;
- pour un jeton d'accès classique, l'équipement de routage doit appeler le serveur d'autorisation 33 à chaque fois qu'il souhaite vérifier le jeton d'accès.

Une telle vérification met par exemple en oeuvre un mécanisme d'authentification de type « OAuth » (ou ses différentes versions), tel que décrit en relation avec la figure 1, sans l'utilisation de serveurs TURN.

En cas de vérification négative (461), on initie une session WebRTC « classique », sans changement dans les tables de routage et sans modification du chemin principal de communication entre le premier client A 31 et le deuxième client B 32 (43).

En cas de vérification positive (462), l'équipement de routage modifie (47) dynamiquement la ou les tables de routage des données entre le premier client A 31 et le deuxième client B 32, de manière à définir un chemin de communication de remplacement entre les deux clients.

La communication WebRTC peut ainsi être redirigée sur ce nouveau chemin de communication de remplacement entre les deux clients. Les premier client A 31 et deuxième client B 32 peuvent alors communiquer en P2P en échangeant des données de type média (52).

Par exemple, comme illustré en figure 3, le chemin principal de communication entre le premier client A 31 et le deuxième client B 32, selon une communication WebRTC « classique », est celui illustré en pointillé, référencé 3432. Le chemin de communication de remplacement entre le premier client A 31 et le deuxième client B 32, dans ce mode de réalisation de l'invention, est celui passant par l'équipement intermédiaire prédéterminé 35, référencé 3435 et 3532.

Selon cet exemple, suite aux vérifications de connectivité, l'équipement de routage peut rediriger les flux de données ayant des jetons valables afin qu'ils passent par un équipement supplémentaire, l'équipement intermédiaire prédéterminé 35. Un tel équipement intermédiaire 35 peut être utilisé pour compter le trafic, collecter des informations de trafic, etc. Ces informations peuvent être utilisées par les fournisseurs de services pour obtenir des statistiques, contrôler des accès, facturer les utilisateurs de services de communications, etc.

Ainsi, en analysant des messages STUN et en vérifiant la validité d'au moins un jeton d'accès, l'équipement de routage 34 peut donc gérer les décisions de routage en modifiant les tables de routage (table d'adresses IP par exemple).

On note que la solution proposée impose que l'équipement de routage 34 soit placé entre deux points d'extrémité ou clients WebRTC. Cette solution est donc particulièrement intéressante pour des fournisseurs d'accès à internet.

Les tableaux ci-après présentent une version simplifiée des tables de routage gérées par l'équipement de routage 34 de la figure 3, avant et après mise en oeuvre de l'invention selon un mode de réalisation particulier.

| *Avant modification :* | | |
|---|---|---|
| *Destination* | *Masque Réseau* | *Interface* |
| Défaut | - | Interface 1 |

| *Après modification :* | | |
|---|---|---|
| *Destination* | *Masque Réseau* | *Interface* |
| Adresse Client B | 255.255.255.255 | Interface 2 |
| Défaut | - | Interface 1 |

Dans le cadre d'une communication WebRTC « classique », la table de routage définit un chemin principal de communication pour l'échange de données entre le premier client A 31 et le deuxième client B 32, encore appelé chemin par défaut. L'interface de sortie de l'équipement de routage 34 est l'interface 1.

Dans le cadre d'une communication WebRTC selon un mode de réalisation de l'invention, l'équipement de routage ajoute une nouvelle entrée correspondant à l'adresse IP du deuxième client B 32 sur une deuxième interface de l'équipement de routage dans la table de routage. La table de routage définit donc un autre chemin de communication pour l'échange de données entre le premier client A 31 et le deuxième client B 32, encore appelé chemin de communication de remplacement, différent du chemin de communication par défaut. L'interface de sortie de l'équipement de routage 34 est alors l'interface 2. Le masque réseau utilisé (255.255.255.255) signifie que l'utilisation de ce chemin de remplacement est réservée à une destination précise (l'adresse du deuxième client B 32).

On note que cette gestion du routage est possible parce que les adresses IP et les numéros de port utilisés pour échanger des messages STUN pour la découverte du réseau/les vérifications de connectivité sont les mêmes que ceux utilisés pour la transmission des flux de données de type média. En d'autres termes, un flux de données de type média utilise les mêmes adresses IP et les mêmes numéros de port que le message STUN associé.

De plus, si le message STUN est un message « classique », ne comprenant pas d'attribut supplémentaire de type jeton d'accès, ou si la validité du jeton d'accès n'est pas vérifiée, le flux de données de type média est envoyé sur le chemin par défaut.

La solution proposée est donc transparente pour les utilisateurs.

### 5.3 Structures simplifiées

On présente finalement, en relation avec les figures 6 et 7, la structure simplifiée d'un terminal et la structure simplifiée d'un équipement de routage mettant respectivement en oeuvre un procédé de transmission de données et un procédé d'échanges de données selon l'un des modes de réalisation décrits ci-dessus.

Comme illustré en figure 6, un terminal selon un mode de réalisation de l'invention comprend une mémoire 61 comprenant une mémoire tampon, une unité de traitement 62, équipée par exemple d'un microprocesseur **µ**P, et pilotée par le programme d'ordinateur 63, mettant en oeuvre le procédé de transmission de données d'un premier navigateur internet vers un deuxième navigateur internet décrit ci-dessus.

A l'initialisation, les instructions de code du programme d'ordinateur 63 sont par exemple chargées dans une mémoire RAM avant d'être exécutées par le processeur de l'unité de traitement 62. Le microprocesseur de l'unité de traitement 62 met en oeuvre les étapes du procédé de transmission de données décrit précédemment, selon les instructions du programme d'ordinateur 63, pour émettre un message de signalisation requérant une communication avec ledit deuxième navigateur, recevoir un attribut spécifique d'autorisation d'échanges de données entre les navigateurs, générer un message de vérification de connectivité entre les navigateurs, et transmettre ce message à un équipement de routage du réseau. Pour cela, le terminal comprend, outre la mémoire tampon 61, un module d'émission 64 d'un message de signalisation requérant une communication avec le deuxième navigateur, un module de réception 65 d'un attribut spécifique d'autorisation d'échanges de données entre les navigateurs, un module de génération 66 d'un message de vérification de connectivité entre les navigateurs, un module de transmission 67 du message au deuxième navigateur, via un équipement de routage du réseau.

Ces modules sont pilotés par le microprocesseur de l'unité de traitement 62.

Comme illustré en figure 7, un équipement de routage selon un mode de réalisation de l'invention comprend une mémoire 71 comprenant une mémoire tampon, une unité de traitement 72, équipée par exemple d'un microprocesseur **µ**P, et pilotée par le programme d'ordinateur 73, mettant en oeuvre le procédé d'échanges de données entre un premier navigateur internet et un deuxième navigateur internet décrit ci-dessus.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un message de vérification de connectivité entre les navigateurs. Le microprocesseur de l'unité de traitement 72 met en oeuvre les étapes du procédé d'échanges de données décrit précédemment, selon les instructions du programme d'ordinateur 73, pour extraire un attribut spécifique d'autorisation d'échanges de données entre les navigateurs du message de vérification de connectivité, vérifier une autorisation d'échanges de données entre les navigateurs, et modifier au moins une table de routage des données entre les navigateurs. Pour cela, l'équipement de routage comprend, outre la mémoire tampon 71, un module de réception 74 d'un message de vérification de connectivité entre les navigateurs, un module de vérification 75 d'une autorisation d'échanges de données entre les navigateurs, et un module de modification 76 d'au moins une table de routage des données entre les navigateurs.

Ces modules sont pilotés par le microprocesseur de l'unité de traitement 72.

## Revendications

1. Procédé d'échanges de données entre un premier navigateur internet et un deuxième navigateur internet d'un réseau de communication,
**caractérisé en ce qu'**il comprend une phase d'initialisation, mettant en oeuvre les étapes suivantes, au niveau d'un équipement de routage dudit réseau placé sur un chemin de communication par défaut entre lesdits premier et deuxième navigateurs :
- réception (24) d'un message de vérification de connectivité entre lesdits navigateurs, ledit message portant un attribut spécifique d'autorisation d'échanges de données entre lesdits navigateurs ;
- vérification (25) d'une autorisation d'échanges de données entre lesdits navigateurs, à partir dudit attribut spécifique ;
- en cas de vérification positive, modification (26) d'au moins une table de routage des données entre ledit premier navigateur et ledit deuxième navigateur, de manière à définir un chemin de communication de remplacement entre lesdits navigateurs, passant par ledit équipement de routage.

2. Procédé d'échanges de données selon la revendication 1, **caractérisé en ce qu'**il comprend une phase d'échanges de données, mettant en oeuvre les étapes suivantes, au niveau dudit équipement de routage :
- réception d'un flux de données en provenance dudit premier navigateur ;
- transmission dudit flux de données audit deuxième navigateur, via un équipement intermédiaire de réseau prédéterminé placé sur ledit chemin de communication de remplacement.

3. Procédé d'échanges de données selon l'une quelconque des revendications 1 et 2, **caractérisé en ce que** ledit message de vérification de connectivité entre lesdits navigateurs est de type STUN.

4. Procédé d'échanges de données selon la revendication 3, **caractérisé en ce que** ladite étape de vérification d'une autorisation d'échanges de données entre lesdits navigateurs met en oeuvre une fonction de type « vérification STUN ».

5. Procédé d'échanges de données selon l'une quelconque des revendications 1 à 4, **caractérisé en ce que** ledit attribut spécifique est un jeton d'accès.

6. Procédé d'échanges de données selon la revendication 5, **caractérisé en ce que** ladite étape de vérification d'une autorisation d'échanges de données met en oeuvre une clé, connue dudit équipement de routage, pour vérifier la validité dudit jeton d'accès.

7. Procédé d'échanges de données selon la revendication 5, **caractérisé en ce que** ladite étape de vérification d'une autorisation d'échanges de données met en oeuvre un échange d'informations avec un serveur d'autorisation pour vérifier la validité dudit jeton d'accès.

8. Equipement de routage d'un réseau de communication, destiné à être placé sur un chemin de communication par défaut entre un premier navigateur internet et un deuxième navigateur internet dudit réseau, **caractérisé en ce qu'**il comprend :
- un module de réception (74) d'un message de vérification de connectivité entre lesdits navigateurs, ledit message portant un attribut spécifique d'autorisation d'échanges de données entre lesdits navigateurs ;
- un module de vérification (75) d'une autorisation d'échanges de données entre lesdits navigateurs, à partir dudit attribut spécifique ;
- un module de modification (76) d'au moins une table de routage des données entre ledit premier navigateur et ledit deuxième navigateur, activé en cas de vérification positive, de manière à définir un chemin de communication de remplacement entre lesdits navigateurs.

9. Procédé de transmission de données d'un premier navigateur internet à destination d'un deuxième navigateur internet d'un réseau de communication, comprenant une étape (20) au cours de laquelle ledit premier navigateur émet un message de signalisation requérant une communication avec ledit deuxième navigateur, **caractérisé en ce qu'**il comprend en outre les étapes suivantes :
- réception (21), par ledit premier navigateur, d'un attribut spécifique d'autorisation d'échanges de données entre lesdits navigateurs, fourni par un serveur d'autorisation ;
- génération (22) d'un message de vérification de connectivité entre lesdits navigateurs, ledit message portant ledit attribut spécifique ; et
- transmission (23) dudit message audit deuxième navigateur via un équipement de routage dudit réseau, conforme à la revendication 8, placé sur un chemin de communication par défaut entre lesdits premier et deuxième navigateurs.

10. Terminal d'un réseau de communication, équipé d'un premier navigateur internet destiné à transmettre des données à destination d'un deuxième navigateur internet contenu dans un terminal distant dudit réseau, et comprenant un module d'émission (64) d'un message de signalisation requérant une communication avec ledit deuxième navigateur,
**caractérisé en ce qu'**il comprend en outre :
- un module de réception (65) d'un attribut spécifique d'autorisation d'échanges de données entre lesdits navigateurs, fourni par un serveur d'autorisation ;
- un module de génération (66) d'un message de vérification de connectivité entre lesdits navigateurs, ledit message portant ledit attribut spécifique ;
- un module de transmission (67) dudit message au deuxième navigateur via un équipement de routage dudit réseau, conforme à la revendication 8, placé sur un chemin de communication par défaut entre lesdits premier et deuxième navigateurs.

11. Programme d'ordinateur comportant des instructions pour la mise en oeuvre d'un procédé selon l'une quelconque des revendications 1 à 7, 9 lorsque ce programme est exécuté par un processeur.

12. Support d'informations, inamovible, ou partiellement ou totalement amovible, lisible par un ordinateur, et comportant des instructions d'un programme d'ordinateur pour l'exécution des étapes d'un procédé selon l'une quelconque des revendications 1 à 7, 9.

## Patentansprüche

1. Verfahren zum Datenaustausch zwischen einem ersten Webbrowser und einem zweiten Webbrowser eines Kommunikationsnetzes,
**dadurch gekennzeichnet, dass** es eine Initialisierungsphase umfasst, die die folgenden Schritte im Bereich einer Routingvorrichtung des Netzes, die auf einem Standardkommunikationsweg zwischen den ersten und zweiten Browsern angeordnet ist, einsetzt:
- Empfang (24) einer Nachricht zur Überprüfung der Konnektivität zwischen den Browsern, wobei die Nachricht ein spezifisches Attribut zur Autorisierung von Datenaustauschen zwischen den Browsern trägt;
- Überprüfung (25) einer Autorisierung den Datenaustauschen zwischen den Browsern auf Basis des spezifischen Attributs;
- im Falle einer positiven Überprüfung Änderung (26) mindestens einer Routingtabelle der Daten zwischen dem ersten Browser und dem zweiten Browser, um einen Ersatzkommunikationsweg zwischen den Browsern zu definieren, der über die Routingvorrichtung verläuft.

2. Datenaustauschverfahren nach Anspruch 1, **dadurch gekennzeichnet, dass** es eine Datenaustauschphase umfasst, die die folgenden Schritte im Bereich der Routingvorrichtung einsetzt:
- Empfang eines Datenstroms von dem ersten Browser;
- Übertragung des Datenstroms an den zweiten Browser über eine vorbestimmte Zwischennetzeinrichtung, die auf dem Ersatzkommunikationsweg angeordnet ist.

3. Datenaustauschverfahren nach einem der Ansprüche 1 und 2, **dadurch gekennzeichnet, dass** die Nachricht zur Überprüfung der Konnektivität zwischen den Browsern vom Typ STUN ist.

4. Datenaustauschverfahren nach Anspruch 3, **dadurch gekennzeichnet, dass** der Schritt der Überprüfung einer Autorisierung eines Datenaustauschs zwischen den Browsern eine Funktion vom Typ "STUN-Überprüfung" einsetzt.

5. Datenaustauschverfahren nach einem der Ansprüche 1 bis 4, **dadurch gekennzeichnet, dass** das spezifische Attribut ein Zugangsjeton ist.

6. Datenaustauschverfahren nach Anspruch 5, **dadurch gekennzeichnet, dass** der Schritt der Überprüfung einer Autorisierung eines Datenaustauschs einen Schlüssel, der der Routingvorrichtung bekannt ist, einsetzt, um die Gültigkeit des Zugangsjetons zu überprüfen.

7. Datenaustauschverfahren nach Anspruch 5, **dadurch gekennzeichnet, dass** der Schritt der Überprüfung einer Autorisierung des Datenaustauschs einen Informationsaustausch mit einem Autorisierungsserver einsetzt, um die Gültigkeit des Zugangsjetons zu überprüfen.

8. Routingvorrichtung eines Kommunikationsnetzes, die dazu bestimmt ist, auf einem Standardkommunikationsweg zwischen einem ersten Webbrowser und einem zweiten Webbrowser des Netzes angeordnet zu sein, **dadurch gekennzeichnet, dass** sie umfasst:
- ein Modul zum Empfang (74) einer Nachricht zur Überprüfung der Konnektivität zwischen den Browsern, wobei die Nachricht ein spezifisches Attribut zur Autorisierung von Datenaustauschen zwischen den Browsern trägt;
- ein Modul zur Überprüfung (75) einer Autorisierung den Datenaustauschen zwischen den Browsern auf Basis des spezifischen Attributs;
- ein Modul zur Änderung (76) mindestens einer Routingtabelle der Daten zwischen dem ersten Browser und dem zweiten Browser, um einen Ersatzkommunikationsweg zwischen den Browsern zu definieren, wobei das Modul zur Änderung im Falle einer positiven Überprüfung aktiviert wird.

9. Verfahren zur Datenübertragung von einem ersten Webbrowser in Richtung eines zweiten Webbrowsers eines Kommunikationsnetzes, umfassend einen Schritt (20), während dessen der ersten Browser eine Anzeigenachricht entsendet, die eine Kommunikation mit dem zweiten Browser fordert, **dadurch gekennzeichnet, dass** es ferner die folgenden Schritte umfasst:
- Empfang (21) durch den ersten Browser eines spezifischen Attributs zur Autorisierung von Datenaustauschen zwischen den Browsern, das von einem Autorisierungsserver geliefert wird;
- Erzeugung (22) einer Nachrichtung zur Überprüfung der Konnektivität zwischen den Browsern, wobei die Nachricht das spezifische Attribut trägt; und
- Übertragung (23) der Nachricht an den zweiten Browser über eine Routingvorrichtung nach Anspruch 8 des Netzes, die auf einem Standardkommunikationsweg zwischen den ersten und zweiten Browsern angeordnet ist.

10. Endgerät eines Kommunikationsnetzes, das mit einem ersten Webbrowser ausgestattet ist, der dazu bestimmt ist, Daten in Richtung eines zweiten Webbrowsers, der in einem entfernten Endgerät des Netzes enthalten ist, zu übertragen, und umfassend ein Modul zum Senden (64) einer Anzeigenachricht, die eine Kommunikation mit dem zweiten Browser fordert,
**dadurch gekennzeichnet, dass** es ferner umfasst:
- ein Modul für den Empfang (65) eines spezifischen Attributs zur Autorisierung von Datenaustauschen zwischen den Browsern, das von einem Autorisierungsserver geliefert wird;
- ein Modul zur Erzeugung (66) einer Nachricht zur Überprüfung der Konnektivität zwischen den Browsern, wobei die Nachricht das spezifische Attribut trägt;
- ein Modul zur Übertragung (67) der Nachricht an den zweiten Browser über eine Routingvorrichtung nach Anspruch 8, die auf einem Standardkommunikationsweg zwischen den ersten und zweiten Browsern angeordnet ist.

11. Computerprogramm, umfassend Anweisungen für den Einsatz eines Verfahrens nach einem der Ansprüche 1 bis 7, 9, wenn dieses Programm von einem Prozessor ausgeführt wird.

12. Nicht entfernbarer oder teilweise oder zur Gänze entfernbarer, von einem Computer lesbarer Informationsträger, umfassend Anweisungen eins Computerprogramms für die Ausführung eines Verfahrens nach einem der Ansprüche 1 bis 7, 9.

## Claims

1. Method for exchanging data between a first Internet browser and a second Internet browser of a communication network,
**characterized in that** it comprises an initialization phase, implementing the following steps, in a routing equipment of said network placed on a default communication path between said first and second browsers:
- receiving (24) a connectivity verification message verifying connectivity between said browsers, said message carrying a specific attribute authorizing data exchanges between said browsers;
- verifying (25) an authorization to exchange data between said browsers, on the basis of said specific attribute;
- in the event of a positive verification, modifying (26) at least one routing table for routing the data between said first browser and said second browser, so as to define a replacement communication path between said browsers, passing through said routing equipment.

2. Data exchange method according to Claim 1, **characterized in that** it comprises a data exchange phase, implementing the following steps, in said routing equipment:
- receiving a data stream from said first browser;
- transmitting said data stream to said second browser, via a predetermined intermediary network equipment placed on said replacement communication path.

3. Data exchange method according to either one of Claims 1 and 2, **characterized in that** said connectivity verification message verifying connectivity between said browsers is a STUN type message.

4. Data exchange method according to Claim 3, **characterized in that** said step of verifying an authorization to exchange data between said browsers implements a "STUN verification" type function.

5. Data exchange method according to any one of Claims 1 to 4, **characterized in that** said specific attribute is an access token.

6. Data exchange method according to Claim 5, **characterized in that** said step of verifying an authorization to exchange data implements a key, known to said routing equipment, in order to verify the validity of said access token.

7. Data exchange method according to Claim 5, **characterized in that** said step of verifying an authorization to exchange data implements an exchange of information with an authorization server in order to verify the validity of said access token.

8. Routing equipment of a communication network, intended to be placed on a default communication path between a first Internet browser and a second Internet browser of said network, **characterized in that** it comprises:
- a reception module (74) for receiving a connectivity verification message verifying connectivity between said browsers, said message carrying a specific attribute authorizing data exchanges between said browsers;
- a verification module (75) for verifying an authorization to exchange data between said browsers, on the basis of said specific attribute;
- a modification module (76) for modifying at least one routing table for routing the data between said first browser and said second browser, activated in the event of a positive verification, so as to define a replacement communication path between said browsers.

9. Method for transmitting data from a first Internet browser to a second Internet browser of a communication network, comprising a step (20) during which said first browser transmits a signalling message requesting communication with said second browser, **characterized in that** it furthermore comprises the following steps:
- receiving (21), by said first browser, a specific attribute authorizing data exchanges between said browsers, provided by an authorization server;
- generating (22) a connectivity verification message verifying connectivity between said browsers, said message carrying said specific attribute; and
- transmitting (23) said message to said second browser via a routing equipment according to Claim 8 of said network placed on a default communication path between said first and second browsers.

10. Terminal of a communication network, equipped with a first Internet browser intended to transmit data to a second Internet browser contained in a remote terminal of said network, and comprising a transmission module (64) for transmitting a signalling message requesting communication with said second browser,
**characterized in that** it furthermore comprises:
- a reception module (65) for receiving a specific attribute authorizing data exchanges between said browsers, provided by an authorization server;
- a generation module (66) for generating a connectivity verification message verifying connectivity between said browsers, said message carrying said specific attribute;
- a transmission module (67) for transmitting said message to the second browser via a routing equipment according to Claim 8 of said network placed on a default communication path between said first and second browsers.

11. Computer program including instructions for implementing a method according to any one of Claims 1 to 7, 9 when this program is executed by a processor.

12. Immovable or partly or completely removable computer-readable information medium including instructions of a computer program for executing a method according to any one of Claims 1 to 7, 9.
